# EUROPEAN PATENT APPLICATION

(11) **EP 4 728 843 A1**
(43) Date of publication of application: **22.04.2026**
(21) Application number: 25207556.9
(22) Date of filing: 08.10.2025
(51) Int. Cl.: A01B 69/04, A01B 69/00

(54) **AUTOMATIC TRAVELLING METHOD, AUTOMATIC TRAVELLING PROGRAM, AND AUTOMATIC TRAVELLING SYSTEM**

(30) Priority: 11.10.2024 JP 2024178575; 14.07.2025 JP 2025117951
(71) Applicant: Yanmar Holdings Co., Ltd., Osaka-shi, Osaka (JP)
(72) Inventor: LEE, Seungkyu, Okayama-shi (JP); MURAYAMA, Masaaki, Okayama-shi (JP); NISHII, Yasuto, Okayama-shi (JP)
(74) Representative: Sekiguchi, Kazuya

(57) **Abstract**

[Problem] Provided are an automatic traveling method, an automatic traveling program, and an automatic traveling system capable of improving traveling position accuracy of an object to be towed that is towed by an automatically traveling work vehicle.

[Solution] In an automatic traveling system 1, a travel processing unit 111 causes automatic traveling of a work vehicle 10 including a tractor and a work machine 30 swingably connected to the tractor. The travel processing unit 111 causes the work vehicle 10 to automatically travel based on positioning information measured by a work machine antenna 164B provided in the work machine 30.

## Description

### TECHNICAL FIELD

The present invention relates to a technique for causing automatic traveling of a work vehicle that tows an object to be towed such as a work machine or a trailer.

### BACKGROUND ART

Conventionally, there is known a technique for causing a work vehicle to automatically travel in a field based on position information measured by a positioning antenna (for example, a GPS antenna) mounted on the work vehicle (for example, see Patent Document 1).

### PRIOR ART DOCUMENT

### PATENT DOCUMENT

Patent Document 1: JP-B2-6253678

### SUMMARY OF INVENTION

### TECHNICAL PROBLEM

For example, in a case where the work vehicle includes an object to be towed, such as a work machine or a trailer, connected to a towing vehicle (tractor) to be swingable via a hitch point, it is difficult to cause the towing vehicle to automatically travel while aligning the object to be towed with a target route.

An object of the present invention is to provide an automatic traveling method, an automatic traveling program, and an automatic traveling system capable of improving traveling position accuracy of an object to be towed that is towed by an automatically traveling towing vehicle.

### SOLUTION TO PROBLEM

An automatic traveling method according to the present invention is a method for automatic traveling of a work vehicle including a towing vehicle and an object to be towed swingably connected to the towing vehicle. The automatic traveling method causes the work vehicle to automatically travel based on first positioning information measured by a first positioning device provided in the object to be towed.

An automatic traveling program according to the present invention is a program for automatic traveling of a work vehicle including a towing vehicle and an object to be towed swingably connected to the towing vehicle. In the automatic traveling program, one or a plurality of processors cause the work vehicle to automatically travel based on first positioning information measured by a first positioning device provided in the object to be towed.

An automatic traveling system according to the present invention is a system that causes a work vehicle to automatically travel, the work vehicle including a towing vehicle and an object to be towed swingably connected to the towing vehicle. The automatic traveling system causes the work vehicle to automatically travel based on first positioning information measured by a first positioning device provided in the object to be towed.

### ADVANTAGEOUS EFFECTS OF INVENTION

According to the present invention, it is possible to provide the automatic traveling method, the automatic traveling program, and the automatic traveling system capable of improving the traveling position accuracy of the object to be towed that is towed by an automatically traveling work vehicle.

### BRIEF DESCRIPTION OF DRAWINGS

Fig. 1 is a block diagram showing a configuration of an automatic traveling system according to an embodiment of the present invention;
Fig. 2 is an external view showing a configuration of a work vehicle according to the embodiment of the present invention;
Fig. 3 is a view showing an example of a target route set in a field according to the embodiment of the present invention;
Fig. 4 is a view showing an example of a position of a positioning antenna set in the work vehicle according to the embodiment of the present invention;
Fig. 5 is a view showing an example of a traveling method of the work vehicle according to the embodiment of the present invention;
Fig. 6 is a view showing an example of the traveling method of the work vehicle according to the embodiment of the present invention;
Fig. 7 is a view showing an example of a menu screen displayed on an operation terminal according to the embodiment of the present invention;
Fig. 8 is a view showing an example of a work machine setting screen displayed on the operation terminal according to the embodiment of the present invention;
Fig. 9 is a view showing an example of the work machine setting screen displayed on the operation terminal according to the embodiment of the present invention;
Fig. 10 is a flowchart showing an example of a procedure of automatic traveling processing executed by the automatic traveling system according to the embodiment of the present invention;
Fig. 11 is a view showing an example of the work machine setting screen displayed on the operation terminal according to the embodiment of the present invention;
Fig. 12 is a view showing an example of the traveling method of the work vehicle according to the embodiment of the present invention;
Fig. 13A is a view showing another example of the work machine setting screen displayed on the operation terminal according to the embodiment of the present invention;
Fig. 13B is a reference view for describing a method for setting an antenna shown in Fig. 13A;
Fig. 14A is a view showing another example of the work machine setting screen displayed on the operation terminal according to the embodiment of the present invention; and
Fig. 14B is a reference view for describing a method for setting an antenna shown in Fig. 14A.

### DESCRIPTION OF EMBODIMENTS

The following embodiment is an embodied example of the present invention, and does not limit the technical scope of the present invention.

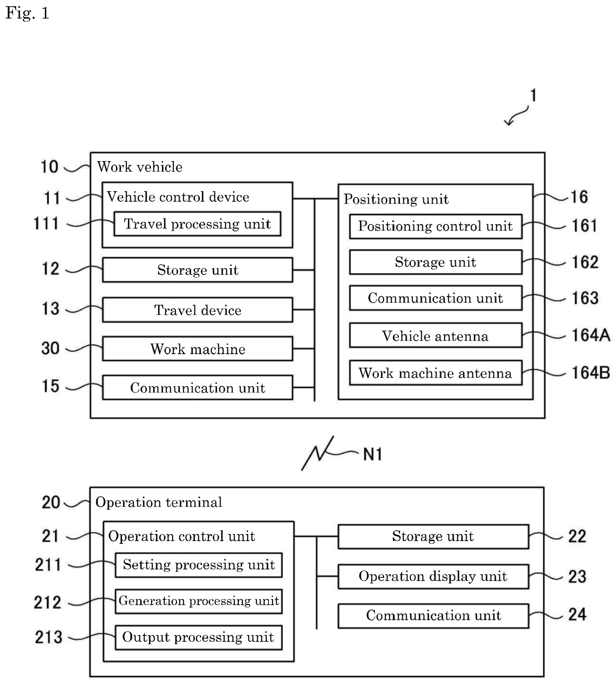

As shown in Fig. 1, an automatic traveling system 1 according to an embodiment of the present invention includes a work vehicle 10 and an operation terminal 20. The work vehicle 10 and the operation terminal 20 can communicate via a communication network N1. For example, the work vehicle 10 and the operation terminal 20 can communicate via a mobile telephone network, a packet network, or a wireless LAN. The automatic traveling system 1 is an example of an automatic traveling system of the present invention.

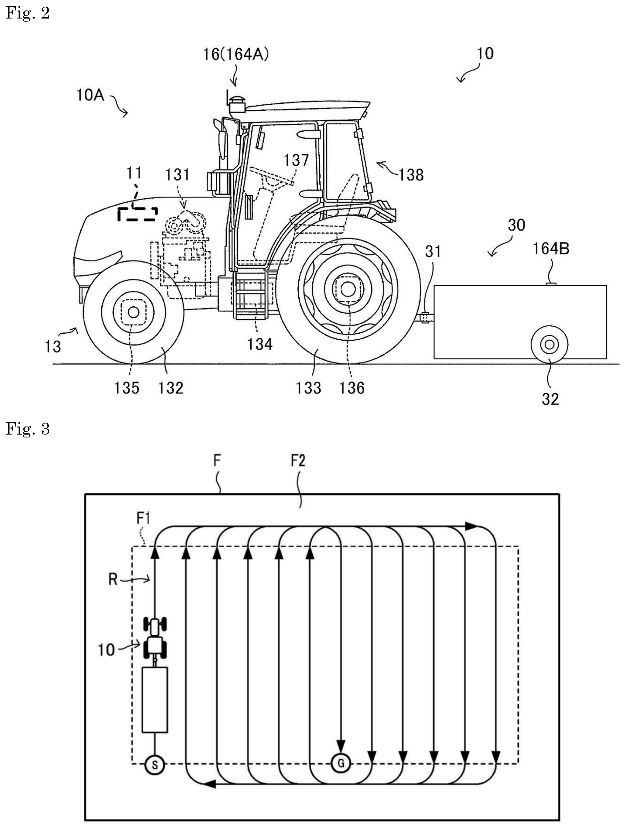

The work vehicle 10 includes a tractor 10A and a work machine 30 swingably connected to the tractor 10A and towed by the tractor 10A. The tractor 10A is an example of a towing vehicle of the present invention. The work machine 30 is, for example, a vegetable harvesting machine, and is an example of an object to be towed of the present invention. The object to be towed of the present invention may be a trailer. The work vehicle 10 has a configuration capable of automatically traveling in a field F (see Fig. 3) along a preset target route R.

For example, an operator registers the field F to be worked and sets the target route R on which the work vehicle 10 is to automatically travel for the field F. The work vehicle 10 automatically travels along the target route R set in advance for the field F based on position information of a current position of the work vehicle 10 acquired by a positioning unit 16. The work vehicle 10 performs predetermined work (for example, vegetable harvesting work) by the work machine 30 while automatically traveling in the field F.

The operation terminal 20 is a portable terminal capable of remotely controlling the work vehicle 10, and includes, for example, a tablet terminal, a notebook personal computer, a smartphone, or the like. The operator can perform setting operations regarding various setting items on the operation terminal 20. For example, the operator operates the operation terminal 20 to register the field F or set the target route R in the registered field F. Further, the operation terminal 20 can display information such as a work status and a travel status of the automatically traveling work vehicle 10, and the operator can grasp the work status and the travel status on the operation terminal 20.

Conventionally, in a case where the work vehicle 10 includes the work machine 30 that is connected to the tractor 10A to be swingable via a hitch point, it is difficult to cause the tractor 10A to automatically travel while aligning the work machine 30 with the target route R. For example, when the tractor 10A is caused to turn along the target route R, the work machine 30 rotates about the hitch point and travels at a position different from a traveling position of the tractor 10A, which makes it difficult to cause the work machine 30 to travel as intended by the operator, and causes a problem that traveling position accuracy of the work machine 30 is deteriorated. On the other hand, the automatic traveling system 1 according to the present embodiment has a configuration capable of improving the traveling position accuracy of the work machine 30 (object to be towed) that is towed by the automatically traveling tractor 10A (towing vehicle) as will be described below.

### [Work vehicle 10]

As shown in Figs. 1 and 2, the work vehicle 10 includes a vehicle control device 11, a storage unit 12, a traveling device 13, the work machine 30, a communication unit 15, the positioning unit 16, and the like. Further, the work vehicle 10 includes the tractor 10A and the work machine 30 swingably (rotatably) connected to the tractor 10A. The vehicle control device 11 is electrically connected to the storage unit 12, the traveling device 13, the work machine 30, the positioning unit 16, and the like. Note that the vehicle control device 11 and the positioning unit 16 may be capable of wireless communication.

The communication unit 15 is a communication interface for connecting the work vehicle 10 to the communication network N1 in a wired or wireless manner and executing data communication according to a predetermined communication protocol with an external device (the operation terminal 20 or the like) via the communication network N1.

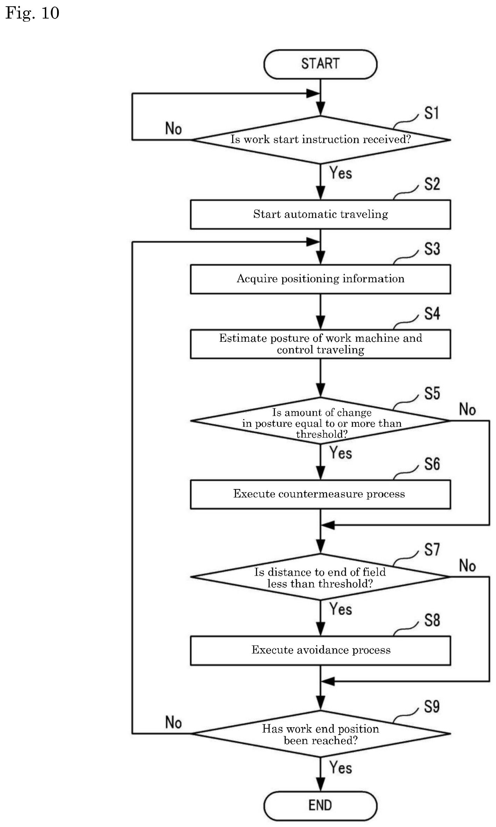

The storage unit 12 is a non-volatile storage unit such as a hard disk drive (HDD), a solid state drive (SSD), or a flash memory that stores various types of information. The storage unit 12 stores a control program such as an automatic traveling program for causing the vehicle control device 11 to execute automatic traveling processing (see Fig. 10) to be described later. For example, the automatic traveling program is non-temporarily recorded in a computer-readable recording medium such as a CD or a DVD, and is read by a predetermined reading device (not shown) and stored in the storage unit 12. Note that the automatic traveling program may be downloaded from a server (not shown) to the work vehicle 10 via the communication network N1 and stored in the storage unit 12. Further, the storage unit 12 stores data of a target route generated in the operation terminal 20, and the like.

The traveling device 13 is a driving unit that causes the tractor 10A to travel. As shown in Fig. 2, the traveling device 13 includes an engine 131, front wheels 132, rear wheels 133, a transmission 134, a front axle 135, a rear axle 136, a steering wheel 137, and the like. Note that the front wheels 132 and the rear wheels 133 are provided individually on the left and right of the tractor 10A. Further, the traveling device 13 is not limited to a wheel type including the front wheels 132 and the rear wheels 133, and may be a crawler type including crawlers provided on the left and right of the tractor 10A.

The engine 131 is a drive source such as a diesel engine or a gasoline engine driven using fuel supplied to a fuel tank (not shown). The traveling device 13 may include an electric motor as a drive source together with the engine 131 or instead of the engine 131. Note that a generator (not shown) is connected to the engine 131, and electric power is supplied from the generator to electric components such as the vehicle control device 11 and the positioning unit 16 provided in the tractor 10A, a battery, and the like. Note that the battery is charged with electric power supplied from the generator. Then, the electric components such as the vehicle control device 11 and the positioning unit 16 provided in the tractor 10A can be driven by electric power supplied from the battery even after the engine 131 is stopped.

A driving force of the engine 131 is transmitted to the front wheels 132 via the transmission 134 and the front axle 135, and is transmitted to the rear wheels 133 via the transmission 134 and the rear axle 136. Further, a driving force of the engine 131 is also transmitted to the work machine 30 via a PTO shaft (not shown). When the tractor 10A performs automatic traveling, the traveling device 13 performs a traveling operation in accordance with a command from the vehicle control device 11. Further, the traveling device 13 decelerates or stops the tractor 10A in accordance with a command from the vehicle control device 11.

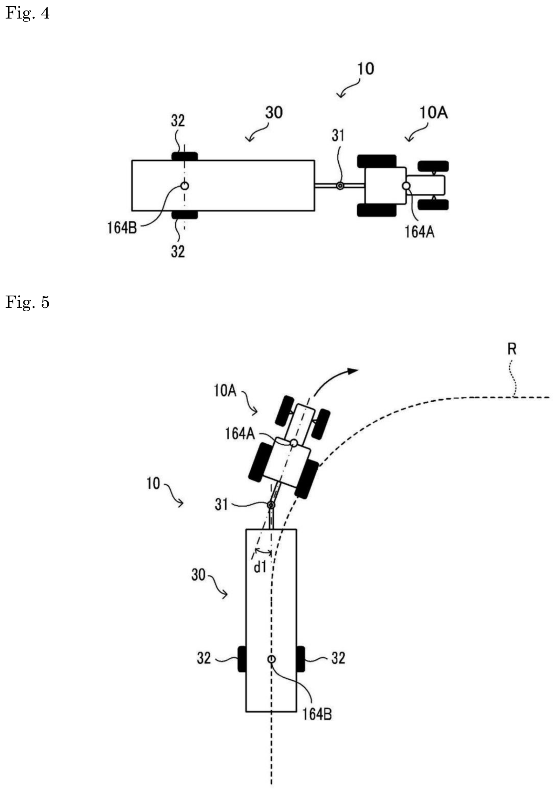

The work machine 30 is, for example, a vegetable harvesting machine, and is detachably and swingably connected to tractor 10A. Specifically, the work machine 30 is connected to the tractor 10A via a hitch point 31(a rotating shaft or a joint portion), and changes its posture (an angle d1 shown in Fig. 5) relative to the tractor 10A with the hitch point 31 as a pivot. Further, the work machine 30 has wheels 32 on the left and right, and moves following the movement of the tractor 10A. The driving of the work machine 30 is started or stopped in accordance with a command from the vehicle control device 11. The vehicle control device 11 may automatically steer the wheels 32 in accordance with the steering of the tractor 10A.

The steering wheel 137 is an operation unit operated by the operator or the vehicle control device 11. For example, in the traveling device 13, an angle of the front wheels 132 is changed by a hydraulic power steering mechanism (not shown) or the like in accordance with an operation on the steering wheel 137 performed by the vehicle control device 11, and a traveling direction of the tractor 10A is changed.

In addition to the steering wheel 137, the traveling device 13 includes a shift lever, an accelerator, a brake, and the like (not shown) operated by the vehicle control device 11. Then, in the traveling device 13, a gear of the transmission 134 is switched to a forward gear, a back gear, or the like in accordance with an operation of the shift lever by the vehicle control device 11, and a traveling mode of the tractor 10A is switched to forward or backward. Further, the vehicle control device 11 operates the accelerator to control a rotation speed of the engine 131. Further, the vehicle control device 11 operates the brake to brake the rotation of the front wheels 132 and the rear wheels 133 by using an electromagnetic brake.

The positioning unit 16 is a communication device including a positioning control unit 161, a storage unit 162, a communication unit 163, a vehicle antenna 164A, a work machine antenna 164B, and the like. For example, as shown in Fig. 2, the positioning unit 16 is provided in an upper portion of a cabin 138 on which the operator gets. Further, the positioning unit 16 is not necessarily installed in the cabin 138. Furthermore, the positioning control unit 161, the storage unit 162, the communication unit 163, the vehicle antenna 164A, and the work machine antenna 164B of the positioning unit 16 may be dispersedly arranged at different positions in the work vehicle 10. For example, the vehicle antenna 164A is arranged on the tractor 10A, and the work machine antenna 164B is arranged on the work machine 30 (see Fig. 2). As described above, the battery is connected to the positioning unit 16, and the positioning unit 16 can operate even while the engine 131 is stopped. Further, the positioning unit 16 may be substituted by, for example, a mobile phone terminal, a smartphone, a tablet terminal, a quantum compass, or the like.

The positioning control unit 161 is a computer system including one or a plurality of processors and a storage memory such as a non-volatile memory and a RAM. The storage unit 162 is a non-volatile memory or the like that stores data such as a program for causing the positioning control unit 161 to execute positioning processing, positioning information, and movement information. For example, the program is non-temporarily recorded in a computer-readable recording medium such as a CD or a DVD, and is read by a predetermined reading device (not shown) and stored in the storage unit 162. Note that the program may be downloaded from a server (not shown) to the positioning unit 16 via the communication network N1 and stored in the storage unit 162.

The communication unit 163 is a communication interface for connecting the positioning unit 16 to the communication network N1 in a wired or wireless manner and executing data communication according to a predetermined communication protocol with an external device such as a base station server via the communication network N1.

The vehicle antenna 164A and the work machine antenna 164B are antennas that receive a radio wave (GNSS signal) transmitted from a satellite.

The positioning control unit 161 calculates a current position of the tractor 10A based on the GNSS signal received by the vehicle antenna 164A from the satellite. Further, the positioning control unit 161 calculates a current position of the work machine 30 based on the GNSS signal received by the work machine antenna 164B from the satellite.

For example, in a case where the tractor 10A automatically travels in the field F, when the vehicle antenna 164A receives radio waves (transmission time, track information, and the like) transmitted from each of a plurality of satellites, the positioning control unit 161 calculates a distance between the vehicle antenna 164A and each of the satellites, and calculates the current position (latitude and longitude) of the tractor 10A based on the calculated distance. Further, the positioning control unit 161 may perform positioning by a real-time kinematic method (RTK-GNSS positioning method (RTK method)) in which the current position of the tractor 10A is calculated using correction information corresponding to a base station (reference station) close to the tractor 10A. In this manner, the tractor 10A performs automatic traveling using the positioning information obtained by the RTK method. Note that the current position (control target point) of the tractor 10A may be the same position as a positioning position (for example, a position of the vehicle antenna 164A) or may be a position shifted from the positioning position.

For example, in a case where the tractor 10A automatically travels in the field F, when the work machine antenna 164B receives radio waves (transmission time, track information, and the like) transmitted from each of a plurality of satellites, the positioning control unit 161 calculates a distance between the work machine antenna 164B and each of the satellites, and calculates the current position (latitude and longitude) of the work machine 30 based on the calculated distance. Further, the positioning control unit 161 may perform positioning by the RTK method in which the current position of the work machine 30 is calculated using correction information corresponding to a base station (reference station) close to the work machine 30. Note that the current position (control target point) of the work machine 30 may be the same position as a positioning position (for example, a position of the work machine antenna 164B) or may be a position shifted from the positioning position.

Fig. 4 shows arrangement positions of the vehicle antenna 164A provided in the tractor 10A and the work machine antenna 164B provided in the work machine 30. For example, the work machine antenna 164B is arranged on an axis of the left and right wheels 32 of the work machine 30 and at a center position of the work machine 30 in the left-right direction. Note that the arrangement position of the work machine antenna 164B is not limited thereto, and can be any position.

Note that the positioning control unit 161 may calculate (measure) the current positions of the tractor 10A and the work machine 30 using a quantum compass.

The vehicle control device 11 includes control devices such as a CPU, a ROM, and a RAM. The CPU is a processor that executes various types of arithmetic processing. The ROM is a non-volatile storage unit in which control programs such as a BIOS and an OS for causing the CPU to execute various types of arithmetic processing are stored in advance. The RAM is a volatile or non-volatile storage unit that stores various types of information, and is used as a temporary storage memory for various types of processing executed by the CPU. Then, the vehicle control device 11 controls the work vehicle 10 by executing, with the CPU, various control programs stored in advance in the ROM or the storage unit 12.

Specifically, as shown in Fig. 1, the vehicle control device 11 includes processing units such as a travel processing unit 111. Note that the vehicle control device 11 functions as the various processing units by executing various types of processing according to the automatic traveling program with the CPU. Further, some or all of the processing units may include an electronic circuit. Note that the automatic traveling program may be a program for causing a plurality of processors to function as the processing unit.

The travel processing unit 111 controls traveling of the work vehicle 10. For example, when a travel mode of the work vehicle 10 is manual traveling (a manual traveling mode), the work vehicle 10 can be caused to manually travel based on an operation (manual steering) of the operator. For example, the travel processing unit 111 acquires operation information corresponding to a driving operation such as a steering wheel operation, a shift operation, a traveling direction switching operation, and a brake operation by the operator, and causes the traveling device 13 to execute the traveling operation based on the operation information. For example, when registering the field F to be worked, the operator gets on the tractor 10A and causes manual traveling (teaching traveling) in an outer peripheral portion of an area to be worked in a predetermined area.

Further, when the travel mode of the work vehicle 10 is automatic traveling (an automatic traveling mode), the travel processing unit 111 causes the work vehicle 10 to automatically travel based on position information (positioning information) indicating the current position of the work vehicle 10 measured by the positioning unit 16. For example, when the work vehicle 10 satisfies a start condition of automatic traveling and acquires a work start instruction (automatic traveling start instruction) from the operator, the travel processing unit 111 starts the automatic traveling of the work vehicle 10 based on the positioning information. Further, the travel processing unit 111 causes the work vehicle 10 to automatically travel from a travel start position (a work start position S) to a travel end position (a work end position G) along the target route R generated and set in advance in the operation terminal 20. For example, the travel processing unit 111 causes the work vehicle 10 to automatically travel straight along a straight route and causes the work vehicle 10 to automatically turn along a turning route. Further, the travel processing unit 111 causes the work vehicle 10 to automatically travel along a plurality of work routes for causing the work vehicle 10 to perform predetermined work, the work routes being included in the target route R, and a plurality of non-work routes that connect the work routes.

For example, the travel processing unit 111 causes the work machine 30 to perform work (vegetable harvesting work) while automatically traveling along the target route R (a work route) in a work area F1 on the inner side of the field F shown in Fig. 3. The travel processing unit 111 causes automatic traveling along the target route R (a non-work route) in a non-work area F2 (headland area) outside the work area F1. The travel processing unit 111 causes the work vehicle 10 to automatically travel from the work start position S to the work end position G.

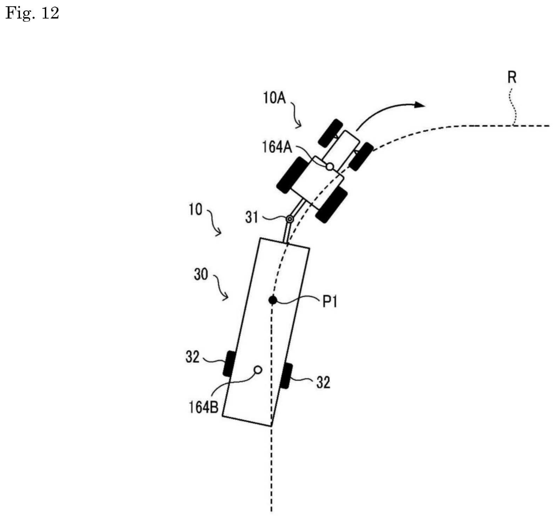

Here, the travel processing unit 111 causes the work vehicle 10 to automatically travel based on work machine positioning information (an example of first positioning information of the present invention) measured by the work machine antenna 164B provided in the work machine 30. Fig. 5 shows an example of the target route R. For example, the travel processing unit 111 controls a traveling position of the tractor 10A such that the work machine 30 passes on the target route R. For example, the travel processing unit 111 controls the traveling of the tractor 10A such that a position (positioning position) of the work machine antenna 164B of the work machine 30 passes on the target route R. As another embodiment, the travel processing unit 111 may control the traveling of the tractor 10A such that a position (control target point), away from a position of the work machine antenna 164B of the work machine 30 by a predetermined distance, passes on the target route R. For example, the control target point may be set at a front end or a rear end of the work machine 30, or may be set at a work position (for example, a position of a harvest unit that harvests vegetables) in the work machine 30 (see Fig. 12 to be described later).

Specifically, the travel processing unit 111 estimates a posture of the work machine 30 with respect to the tractor 10A based on the positioning information (work machine-side information) of the work machine antenna 164B, and causes the work vehicle 10 to automatically travel based on the estimated posture of the work machine 30. Further, the travel processing unit 111 estimates a posture of the work machine 30 based on the work machine positioning information of the work machine antenna 164B and vehicle positioning information (an example of second positioning information of the present invention) measured by the vehicle antenna 164A.

For example, the travel processing unit 111 estimates an amount of change in the posture of the work machine 30 from a current traveling state of the tractor 10A based on the work machine positioning information and the vehicle positioning information, and controls the traveling direction of the tractor 10A based on the estimated amount of change. For example, the travel processing unit 111 acquires information (change in the work machine positioning information) on a moving direction of the work machine 30 when the tractor 10A actually moves in a predetermined direction, and feeds back the information to estimate (predict) the moving direction of the work machine 30 (the amount of change in the posture) with respect to a direction in which the tractor 10A moves next. The travel processing unit 111 controls the traveling direction of the tractor 10A such that the work machine 30 follows the target route R based on the amount of change in the moving direction (posture) of the work machine 30.

The travel processing unit 111 also controls the direction (traveling direction) of the tractor 10A such that the amount of change is less than a threshold. In this manner, the travel processing unit 111 feeds back the information on a posture change of the work machine 30 based on the current traveling state of the tractor 10A, and controls the traveling direction of the tractor 10A such that the work machine 30 travels on a target position.

Here, when the amount of change increases, there is a possibility that the behavior of the work machine 30 becomes unstable, for example, the wheels 32 of the work machine 30 slip (idle) or skid. When the amount of change is equal to or more than the threshold, the travel processing unit 111 causes the tractor 10A to execute a predetermined countermeasure process. The countermeasure process includes a process of decelerating or stopping the tractor 10A or a process of causing the tractor 10A to travel forward or backward or to turn in order to correct the posture of the work machine 30 (a correction process: a retry operation). For example, when the amount of change is equal to or more than the threshold, the travel processing unit 111 decelerates or stops the tractor 10A to ensure safety.

Further, when the amount of change is equal to or more than the threshold, the travel processing unit 111 executes the retry operation for causing the tractor 10A to travel forward or backward or to turn such that the amount of change is less than the threshold. For example, the travel processing unit 111 acquires in advance information on the behavior of the work machine 30 with respect to each of forward traveling, backward traveling, and turning of the tractor 10A, feeds back the information to execute the retry operation, and corrects the posture of the work machine 30.

Note that the travel processing unit 111 may compare the estimated position (positioning position) of the work machine 30 with a position through which the work machine 30 actually passes to control the traveling direction of the tractor 10A or to execute the countermeasure process. Further, the countermeasure process may include a notification process of notifying the operator that the amount of change has become equal to or more than the threshold.

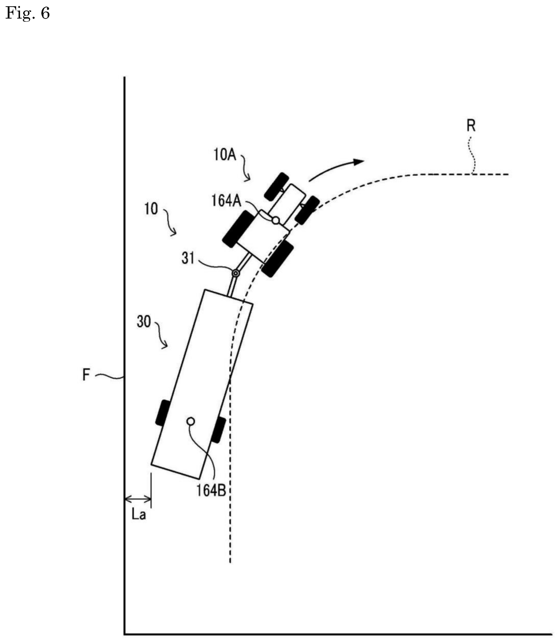

When a distance La from an end of the work machine 30, which is specified based on the work machine positioning information of the work machine 30, to an end (a field outer shape) of the field F is less than a predetermined distance, the travel processing unit 111 causes the tractor 10A to execute an avoidance process for preventing the work machine 30 from coming into contact with the end of the field F or jumping out of the field. For example, as shown in Fig. 6, when the tractor 10A turns to the right near the end of the field F, a left rear end of the work machine 30 may approach the end of the field F. When the work machine 30 approaches the end of the field F or jumps out of the field, there is a possibility of contact with an obstacle (such as a bank). Therefore, when the distance La from the end of the work machine 30 to the end of the field F is less than the predetermined distance, the travel processing unit 111 causes the tractor 10A to execute the avoidance process such as deceleration, stop, and the retry operation. As a result, the safety at the end of the field F can be ensured.

Note that the travel processing unit 111 grasps a position of the end (an outer shape) of the work machine 30 based on the position of the work machine antenna 164B in the work machine 30 and determines whether or not the distance La is less than the predetermined distance. In this manner, the position and the posture of the work machine 30 with respect to the tractor 10A can be accurately grasped by arranging the work machine antenna 164B in the work machine 30, so that the distance La can be accurately calculated. Therefore, appropriate avoidance process can be executed, and unnecessary avoidance process can be prevented from being executed. As another embodiment, the travel processing unit 111 may determine whether or not the distance La is less than the predetermined distance based on a detection result of a camera, an obstacle sensor, or the like mounted on the tractor 10A.

As described above, the work vehicle 10 controls the traveling (traveling direction and vehicle speed) of the tractor 10A such that the work machine 30 travels along the target route R while estimating the posture of the work machine 30 based on the vehicle positioning information measured by the vehicle antenna 164A arranged in the tractor 10A and the work machine positioning information measured by the work machine antenna 164B arranged in the work machine 30.

When the work machine 30 is connected to the tractor 10A to be offset in the left-right direction, the travel processing unit 111 may calculate a difference between a preset offset amount and an offset amount during traveling, and adjust the offset amount of the work machine 30 so as to reduce the difference. Further, the operator may be notified of the calculated difference.

### [Operation terminal 20]

As shown in Fig. 1, the operation terminal 20 is an information processing apparatus including an operation control unit 21, a storage unit 22, an operation display unit 23, a communication unit 24, and the like. The operation terminal 20 may include a portable terminal such as a tablet terminal or a smartphone.

The communication unit 24 is a communication interface for connecting the operation terminal 20 to the communication network N1 in a wired or wireless manner and executing data communication according to a predetermined communication protocol with an external device such as one or a plurality of work vehicles 10 via the communication network N1.

The operation display unit 23 is a user interface including a display unit such as a liquid crystal display or an organic EL display that displays various types of information, and an operation unit such as a touch panel, a mouse, or a keyboard that receives an operation. A worker can perform an operation of registering various types of information (work vehicle information, field information, work information, and the like to be described later) by operating the operation unit on an operation screen displayed on the display unit. Further, the worker can operate the operation unit to instruct the work vehicle 10 to start work and to stop traveling. Further, at a place away from the work vehicle 10, the worker can grasp the traveling state of the work vehicle 10 that automatically travels along the target route R in the field F from a travel trajectory displayed on the operation terminal 20 and a captured image of the camera.

The storage unit 22 is a non-volatile storage unit such as an HDD, an SSD, or a flash memory that stores various types of information. The storage unit 22 stores a control program for causing the operation control unit 21 to execute various types of control processing. For example, the control program is non-temporarily recorded in a computer-readable recording medium such as a CD or a DVD, and is read by a predetermined reading device (not shown) and stored in the storage unit 22. Note that the control program may be downloaded from a server (not shown) to the operation terminal 20 via the communication network N1 and stored in the storage unit 22.

The operation control unit 21 includes control devices such as a CPU, a ROM, and a RAM. The CPU is a processor that executes various types of arithmetic processing. The ROM is a non-volatile storage unit in which control programs such as a BIOS and an OS for causing the CPU to execute various types of arithmetic processing are stored in advance. The RAM is a volatile or non-volatile storage unit that stores various types of information, and is used as a temporary storage memory (work area) for various types of processing executed by the CPU. Then, the operation control unit 21 controls the operation terminal 20 by executing, with the CPU, various control programs stored in advance in the ROM or the storage unit 22.

As shown in Fig. 1, the operation control unit 21 includes various processing units such as a setting processing unit 211, a generation processing unit 212, and an output processing unit 213. Note that the operation control unit 21 functions as the various processing units by executing, with the CPU, various types of processing according to a control program. Further, some or all of the processing units may include an electronic circuit. Note that the control program may be a program for causing a plurality of processors to function as the processing unit.

The setting processing unit 211 sets and registers various types of setting information for causing the work vehicle 10 to execute automatic traveling. Specifically, the setting processing unit 211 registers information regarding the work vehicle 10 (hereinafter referred to as work vehicle information). When the worker performs a registration operation on the operation terminal 20, the setting processing unit 211 registers information such as a type (model) of the work vehicle 10, positions where antennas (the vehicle antenna 164A and the work machine antenna 164B) are attached in the work vehicle 10, a type of the work machine 30, a size and a shape of the work machine 30, a position of the work machine 30 with respect to the work vehicle 10, a vehicle speed and an engine speed during work of the work vehicle 10, and a vehicle speed and an engine speed during turning of the work vehicle 10.

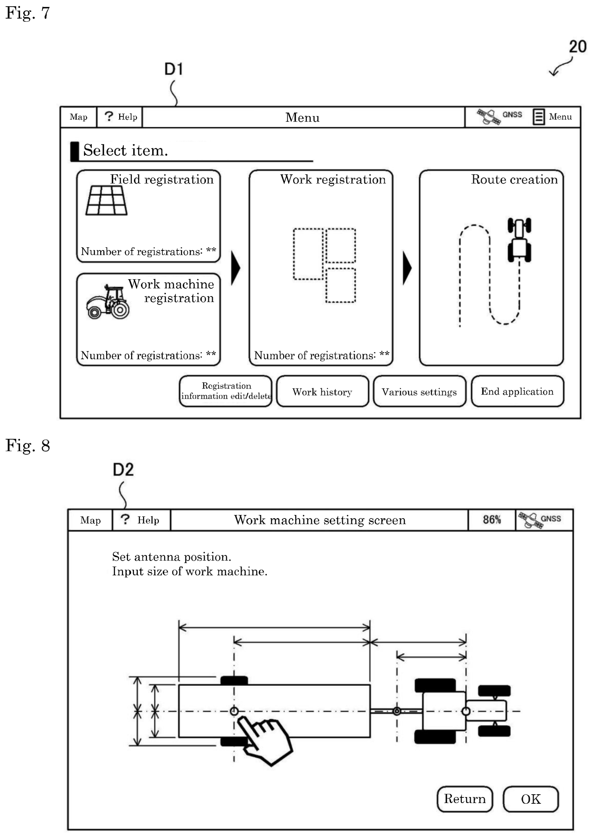

For example, the setting processing unit 211 displays a menu screen D1 shown in Fig. 7 on the operation display unit 23. The operator selects "work machine registration" on the menu screen D1 and registers work machine information on the work machine 30. For example, when the operator selects "work machine registration", the setting processing unit 211 displays a work machine setting screen D2 shown in Fig. 8. On the work machine setting screen D2, the operator can set positions of the vehicle antenna 164A and the work machine antenna 164B and an outer size of the work machine 30. For example, when the operator designates (taps) a position of the work machine antenna 164B attached to the work machine 30 on the work machine setting screen D2, the setting processing unit 211 sets the designated position as the position of the work machine antenna 164B. When the operator designates (taps) a position of the vehicle antenna 164A attached to the tractor 10A, the setting processing unit 211 sets the designated position as the position of the vehicle antenna 164A. The operator can attach each of the antennas to any position and register the position.

The setting processing unit 211 may display initial setting positions of the vehicle antenna 164A and the work machine antenna 164B on the work machine setting screen D2. For example, the setting processing unit 211 may display a position on the axis of the left and right wheels 32 of the work machine 30, a distal end position of the work machine 30, or a work position (for example, a position of the harvest unit that harvests vegetables) in the work machine 30 as the initial setting position of the work machine antenna 164B. In this case, the operator may perform an operation of changing the setting position of the work machine antenna 164B.

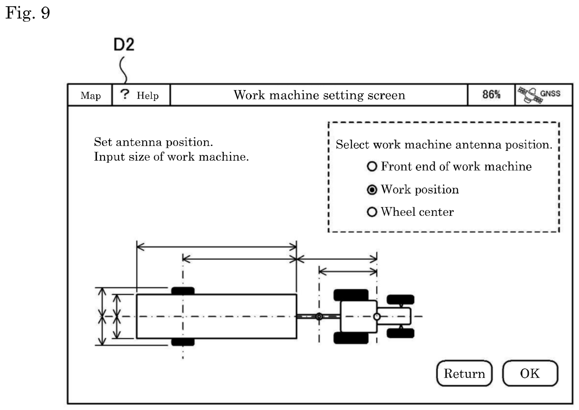

As another embodiment, as shown in Fig. 9, the setting processing unit 211 may be able to select the position of the work machine antenna 164B from a plurality of options ("front end of work machine", "work position (position of harvest unit)", "wheel center", and the like).

On the work machine setting screen D2, the operator inputs a distance between the vehicle antenna 164A and the hitch point 31, a distance between the vehicle antenna 164A and the front end of the work machine 30, a distance between the work machine antenna 164B and the front end of the work machine 30, a distance between the work machine antenna 164B and the rear end of the work machine 30, a distance between the work machine antenna 164B and the wheels 32, outer sizes of the tractor 10A and the work machine 30, and the like.

Note that the input of the outer size of the work machine 30 may be screen input on a keypad displayed on a display screen, may be voice input by a voice uttered by the operator, or may be read by a setting reading function. Further, the setting reading function may be a function of setting information of the work machine 30 by communication between the work machine 30 and a main machine (the tractor 10A) using ISO BUS or the like. For example, the work machine 30 transmits an outer size, position information of the work machine antenna 164B, steering angle information, and the like to the tractor 10A, and the tractor 10A acquires the information and automatically performs settings. Further, the setting reading function may be a function of reading set values that have been already set when the work machine 30 is selected in the "work machine registration".

Further, the setting processing unit 211 registers information regarding the field F (hereinafter, referred to as field information). When a registration operation is performed on the operation terminal 20, the setting processing unit 211 registers information such as a position and a shape of the field F, the work start position S at which work is started, the work end position G at which work is ended, and a work direction. Note that the work direction means a direction in which the work vehicle 10 travels while performing work with the work machine 30 in the work area excluding the non-work area from the field F. For example, the worker selects "field registration" on the menu screen D1 and registers the field information.

The information on the position and the shape of the field F can be automatically acquired, for example, as the operator gets on the work vehicle 10 and drives the work vehicle 10 so as to make one round along an outer periphery of a predetermined area (see Fig. 3), and a transition of position information on the vehicle antenna 164A at that time is recorded. Specifically, the setting processing unit 211 acquires position information of a current position of the work vehicle 10 based on the positioning information measured by the positioning unit 16. The setting processing unit 211 registers the acquired position information in the storage unit 22.

Further, the setting processing unit 211 registers information regarding a specific way of performing work (hereinafter referred to as work information). In addition, the setting processing unit 211 is configured to be able to register, as the work information, the presence or absence of cooperative work between the unmanned work vehicle 10 and the manned work vehicle 10, the number of skips which is the number of work routes to be skipped when the work vehicle 10 turns in a headland, a width of the headland, a width of a non-work area, and the like. For example, the operator selects "work registration" on the menu screen D1 and registers information of a travel route.

The generation processing unit 212 generates the target route R along which the work vehicle 10 automatically travels in the field F. When receiving an instruction to generate the target route R from the operator selecting "route creation" on the menu screen D1, the generation processing unit 212 executes a process of generating the target route R. Specifically, the generation processing unit 212 generates, as the target route R, a route passing through a position (for example, a position where an object to be harvested is planted) of a work target object. That is, the generation processing unit 212 generates a route for causing the work machine 30 to pass therethrough as the target route R such that the work machine 30 can perform work (for example, harvesting work). In the present embodiment, the tractor 10A and the work machine 30 are connected such that relative postures can be changed, and thus, a traveling position of the tractor 10A and a traveling position of the work machine 30 do not necessarily coincide with each other as shown in Fig. 5. Therefore, the generation processing unit 212 generates the target route R for causing the work machine 30 actually performing work (harvesting work) to travel. Specifically, the generation processing unit 212 generates the target route R (see Fig. 3) including a target work route on which the work machine 30 is caused to travel in the work area F1 and a target non-work route (a turning route) on which the work machine 30 moves from the work route to the next work route in the non-work area F2.

As another embodiment, the generation processing unit 212 may generate, as the target route R, a travel route along which the tractor 10A should travel in order for the work machine 30 to pass through the position of the work target object. For example, the generation processing unit 212 simulates a route along which the work machine 30 should travel based on the position of the work target object, estimates a posture change of the tractor 10A when the work machine 30 travels along the route, and generates a route along which the tractor 10A should travel as the target route R based on the estimation result. As another embodiment, the generation processing unit 212 may individually generate a target route corresponding to a traveling position of the work machine 30 and a target route corresponding to a traveling position of the tractor 10A.

When the target route R of the work vehicle 10 is generated, the generation processing unit 212 registers the target route R in association with the field F. Note that the generation processing unit 212 can generate and register a plurality of target routes corresponding to content of work for one field F.

In addition, the output processing unit 213 outputs route data of the target route R to the work vehicle 10. For example, when the operator selects a desired target route R on the operation screen and gives the work start instruction, the output processing unit 213 outputs route data of the selected target route R to the work vehicle 10.

In the work vehicle 10, the route data of the target route R generated by the operation terminal 20 is transferred to the work vehicle 10 and stored in the storage unit 12, and the traveling of the tractor 10A is controlled to execute automatic traveling such that the work machine 30 follows the target route R while the current positions and the postures of the tractor 10A and the work machine 30 are detected by the vehicle antenna 164A and the work machine antenna 164B, respectively.

For example, in a case where a predetermined start condition is satisfied, when a work start button is pressed on the operation screen by the operator and the work start instruction is given, the work vehicle 10 starts automatic traveling by the travel processing unit 111 of the work vehicle 10 and starts work (harvesting work) by the work machine 30. For example, the start of the automatic traveling of the work vehicle 10 is permitted on condition that the current position of the tractor 10A is within a set distance from the work start position S and a vehicle orientation is within a set orientation. Note that the start condition for permitting the automatic traveling of the work vehicle 10 is not limited to the above condition. The travel processing unit 111 causes the work vehicle 10 to automatically travel from the work start position S to the work end position G along the target route R acquired from the operation terminal 20.

Note that the operation terminal 20 may be able to access a website (agricultural support site) of an agricultural support service provided by a server (not shown) via the communication network N1. In this case, the operation terminal 20 can function as an operation terminal of the server, by the operation control unit 21 executing a browser program. Then, the server includes the above-described individual processing units and executes the individual processes.

### [Automatic traveling processing]

Hereinafter, an example of the automatic traveling processing executed by the automatic traveling system 1 will be described with reference to Fig. 10.

Note that the present invention can be understood as an invention of an automatic traveling method for executing one or a plurality of steps included in the automatic traveling processing. Further, one or a plurality of steps included in the automatic traveling processing described here may be appropriately omitted. Further, an execution order of each step in the automatic traveling processing may be different within a range in which similar operational effects are produced. Furthermore, here, a case where the vehicle control device 11 executes each step in the automatic traveling processing will be described as an example, but an automatic traveling method in which one or a plurality of processors dispersedly execute each step in the automatic traveling processing is also considered as another embodiment.

### <Step S1>

In step S1, the vehicle control device 11 determines whether or not a work start instruction has been acquired. When the vehicle control device 11 acquires the work start instruction from the operation terminal 20 (S1: Yes), the processing proceeds to step S2. The vehicle control device 11 waits until the work start instruction is acquired (S1: No).

### <Step S2>

In step S2, the vehicle control device 11 starts the automatic traveling processing. Specifically, the vehicle control device 11 causes the work vehicle 10 to start automatic traveling according to the target route R (see Fig. 3) corresponding to the route data acquired from the operation terminal 20.

### <Step S3>

In step S3, the vehicle control device 11 acquires the positioning information of the work vehicle 10. Specifically, when the automatic traveling is started, the vehicle control device 11 starts to acquire the vehicle positioning information measured by the vehicle antenna 164A provided in the tractor 10A and the work machine positioning information measured by the work machine antenna 164B provided in the work machine 30. The vehicle control device 11 acquires the vehicle positioning information and the work machine positioning information from the vehicle antenna 164A and the work machine antenna 164B at a predetermined cycle.

### <Step S4>

In step S4, the vehicle control device 11 controls the traveling of the tractor 10A while estimating the posture of the work machine 30. Specifically, the vehicle control device 11 estimates the posture of the work machine 30 based on the vehicle positioning information and the work machine positioning information. For example, the vehicle control device 11 acquires information (change in the work machine positioning information) on a moving direction of the work machine 30 when the tractor 10A actually moves in a predetermined direction, and feeds back the information to estimate the moving direction of the work machine 30 (the amount of change in the posture) with respect to a direction in which the tractor 10A moves next. In this manner, the vehicle control device 11 estimates a traveling direction of the work machine 30 with respect to a traveling direction of the tractor 10A while acquiring (feeding back) a posture change of the work machine 30 towed by the tractor 10A during the automatic traveling of the tractor 10A. Then, the vehicle control device 11 controls the traveling direction of the tractor 10A such that the work machine 30 follows the target route R based on the estimated moving direction (posture change) of the work machine 30. In this manner, the vehicle control device 11 controls the traveling of the tractor 10A such that the work machine 30 passes on the target route R while checking the posture change of the work machine 30 during the automatic traveling processing of the tractor 10A. Note that the vehicle control device 11 may control the traveling direction of the tractor 10A and the vehicle speed of the tractor 10A.

For example, in the state shown in Fig. 5, when it is estimated that the work machine 30 is displaced inward from the target route R in a case where the tractor 10A is assumed to turn to the right next, the vehicle control device 11 moves the tractor 10A in the straight direction or the left direction such that the work machine 30 follows the target route R. In this manner, the vehicle control device 11 controls the traveling of the tractor 10A while estimating the posture of the work machine 30 based on the vehicle positioning information and the work machine positioning information.

### <Step S5>

In step S5, the vehicle control device 11 determines whether or not the amount of change in the posture of the work machine 30 is equal to or more than the threshold. When the vehicle control device 11 determines that the amount of change in the posture of the work machine 30 is equal to or more than the threshold (S5: Yes), the processing proceeds to step S6. On the other hand, when the vehicle control device 11 determines that the amount of change in the posture of the work machine 30 is less than the threshold (S5: No), the processing proceeds to step S7.

### <Step S6>

In step S6, the vehicle control device 11 causes the tractor 10A to execute a predetermined countermeasure process. For example, the vehicle control device 11 executes the process of decelerating or stopping the tractor 10A, or the process (retry operation) of causing the tractor 10A to travel forward or backward or to turn in order to change the posture of the work machine 30.

For example, when the amount of change in the posture of the work machine 30 is equal to or more than the threshold, the vehicle control device 11 causes the tractor 10A to execute the retry operation until the amount of change is less than the threshold. As another embodiment, the vehicle control device 11 may first execute the retry operation a predetermined number of times when the amount of change in the posture of the work machine 30 is equal to or more than the threshold, and decelerate or stop the tractor 10A when the amount of change is still equal to or more than the threshold.

In the operation terminal 20, the operator may set in advance the countermeasure processes to be executed by the tractor 10A when the amount of change in the posture of the work machine 30 is equal to or more than the threshold. Further, the operator may set the priority order of the countermeasure processes in advance.

Further, the vehicle control device 11 may switch the countermeasure process in accordance with the amount of change when the amount of change in the posture of the work machine 30 is equal to or more than the threshold. For example, the vehicle control device 11 executes the retry operation when the amount of change is at a low level, executes the deceleration process and the retry operation when the amount of change is at a medium level, and executes the stop process when the amount of change is at a high level.

### <Step S7>

In step S7, the vehicle control device 11 determines whether or not the distance La (see Fig. 6) from the end of the work machine 30 to the end (field outer shape) of the field F is less than the predetermined distance. When the vehicle control device 11 determines that the distance La is less than the predetermined distance (S7: Yes), the processing proceeds to step S8. On the other hand, when the vehicle control device 11 determines that the distance La is the predetermined distance or more (S7: No), the processing proceeds to step S9.

### <Step S8>

In step S8, the vehicle control device 11 causes the tractor 10A to execute a predetermined avoidance process. For example, the vehicle control device 11 executes the process of decelerating or stopping the tractor 10A, or the process (retry operation) of causing the tractor 10A to travel forward or backward or to turn in order to change the posture of the work machine 30.

For example, when the distance La is less than the predetermined distance, the vehicle control device 11 causes the tractor 10A to execute the retry operation until the distance La is equal to or more than the predetermined distance. As another embodiment, the vehicle control device 11 may first execute the retry operation a predetermined number of times when the distance La is less than the predetermined distance, and may decelerate or stop the tractor 10A when the distance La is still less than the predetermined distance.

In the operation terminal 20, the operator may set in advance the avoidance processes to be executed by the tractor 10A when the distance La is less than the predetermined distance. Further, the operator may set the priority order of the avoidance processes in advance.

Further, the vehicle control device 11 may switch the avoidance process in accordance with the distance La when the distance La is less than the predetermined distance. For example, the vehicle control device 11 causes the retry operation to be executed when the distance La is equal to or more than a first distance L1 and less than a predetermined distance L0, causes the deceleration process to be executed when the distance La is equal to or more than a second distance L2 and less than the first distance L1, causes the deceleration process and the retry operation to be executed when the distance La is equal to or more than the second distance L2 and less than the first distance L1, and causes the stop process to be executed when the distance La is less than the second distance L2. Note that the distances satisfy a relationship of 0 < L2 < L1 < L0.

### <Step S9>

In step S9, the vehicle control device 11 determines whether or not the work vehicle 10 has reached the work end position G (see Fig. 3). When the vehicle control device 11 determines that the work vehicle 10 has reached the work end position G (S9: Yes), the automatic traveling processing is ended. When the vehicle control device 11 determines that the work vehicle 10 has not reached the work end position G (S9: No), the processing proceeds to step S3. The vehicle control device 11 repeatedly executes the above-described processing until the work vehicle 10 reaches the work end position G (S9: No).

For example, returning to step S3, the vehicle control device 11 acquires the positioning information (the vehicle positioning information and the work machine positioning information) from the vehicle antenna 164A and the work machine antenna 164B, respectively. Then, the vehicle control device 11 estimates the posture of the work machine 30 and controls the traveling of the tractor 10A such that the work machine 30 follows the target route R (step S4), and executes the countermeasure process when the amount of change in the posture of the work machine 30 is equal to or more than the threshold (step S6), and executes the avoidance process when the distance La from the work machine 30 to the end of the field is less than the predetermined distance (step S8). The vehicle control device 11 repeatedly executes the processing of steps S3 to S8 until the work vehicle 10 reaches the work end position G.

In this manner, the vehicle control device 11 repeatedly executes the above-described processing from the work start position S to the work end position G, and controls the traveling of the tractor 10A such that the work machine 30 follows the target route R.

As described above, the automatic traveling system 1 according to the present embodiment causes the work vehicle 10 to automatically travel, the work vehicle 10 including the tractor 10A (towing vehicle) and the work machine 30 (object to be towed) swingably connected to the tractor 10A. Further, the automatic traveling system 1 causes the work vehicle 10 to automatically travel based on the work machine positioning information measured by the work machine antenna 164B provided in the work machine 30. In this manner, positioning antennas are attached to the work machine 30, and the work vehicle 10 automatically travels based on positioning information of the work machine 30, whereby the position of the work machine 30 can be accurately aligned with the target route R. Therefore, the traveling position accuracy of the work machine 30 towed by the tractor 10A can be improved.

Further, the automatic traveling system 1 estimates the posture of the work machine 30 with respect to the tractor 10A based on the work machine positioning information, and causes the tractor 10A to automatically travel based on the estimated posture of the work machine 30. For example, the automatic traveling system 1 estimates the posture of the work machine 30 based on the work machine positioning information and the vehicle positioning information. Then, the automatic traveling system 1 controls the traveling direction of the tractor 10A based on the amount of change in the posture of the work machine 30 estimated from the current traveling state of the tractor 10A. As a result, the tractor 10A can accurately grasp the posture change (behavior) of the work machine 30 in accordance with the traveling state, so that the position of the work machine 30 can be accurately aligned with the target route R by controlling the traveling of the tractor 10A.

### [Other embodiments]

The present invention is not limited to the above-described embodiment. Other embodiments of the present invention will be described below.

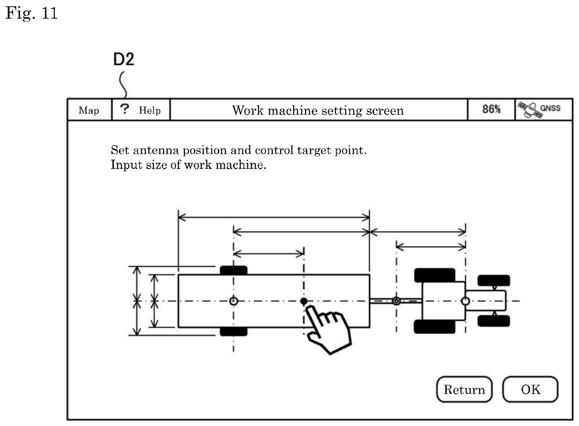

As another embodiment of the present invention, as shown in Fig. 11, an operator may set, on the work machine setting screen D2, a position of the work machine antenna 164B of the work machine 30 and a control target point P1 for controlling a position of the work machine 30. For example, the operator designates (taps) the position of the work machine antenna 164B attached to the work machine 30 and a position of the control target point P1 on the work machine setting screen D2 shown in Fig. 11. Note that the position of the work machine antenna 164B may be set in advance, and in this case, the operator designates only the control target point P1.

The setting processing unit 211 of the operation terminal 20 sets the control target point P1 at the position designated by the operator. The setting processing unit 211 sets a distance between the position of the work machine antenna 164B and the control target point P1. As a result, the vehicle control device 11 controls traveling of the tractor 10A such that the control target point P1 follows the target route R as shown in Fig. 12 based on work machine positioning information of the work machine antenna 164B and the distance between the work machine antenna 164B and the control target point P1. That is, the vehicle control device 11 controls the traveling of the tractor 10A such that the control target point P1 passes through the preset target route R. The control target point P1 is, for example, a work position (for example, a position of a harvest unit that harvests vegetables) in the work machine 30. The operator can set the control target point P1 at any position. As another embodiment, the setting processing unit 211 may automatically set the control target point P1 in accordance with a type of the work machine 30, or may present a recommended position of the control target point P1 to the operator.

In the above-described embodiment, the vehicle control device 11 estimates the posture of the work machine 30 with respect to the tractor 10A based on the vehicle positioning information measured by the vehicle antenna 164A provided in the tractor 10A and the work machine positioning information measured by the work machine antenna 164B provided in the work machine 30. As another embodiment, the vehicle control device 11 may estimate the posture of the work machine 30 with respect to the tractor 10A based on a rotation angle (the angle d1 in Fig. 5) of a joint portion of the hitch point 31 and the work machine positioning information. The rotation angle can be detected by, for example, a sensor provided in the joint portion. According to the above configuration, a positioning antenna can be attached only to the work machine 30, and a positioning antenna of the tractor 10A can be omitted.

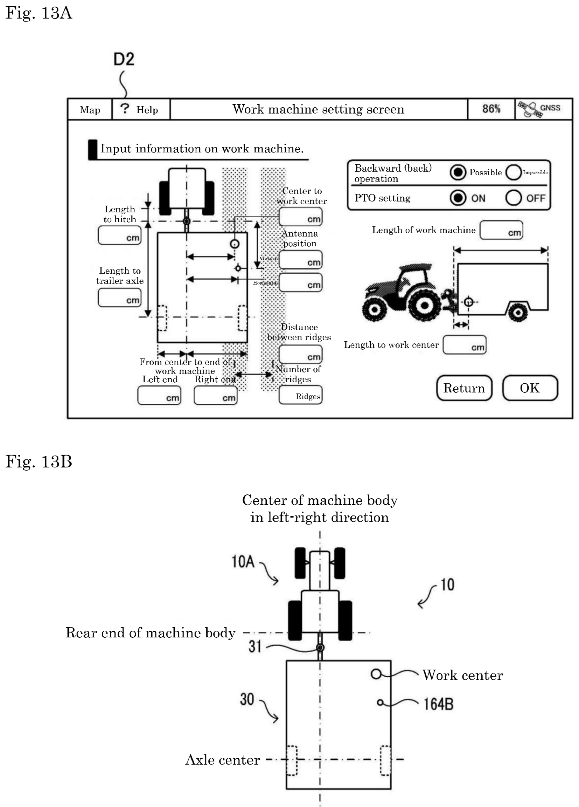

Another method for setting the work machine antenna 164B will be described. Fig. 13A shows another example of the work machine setting screen D2. Note that Fig. 13B is a reference view for describing the method for setting an antenna shown in Fig. 13A. For example, as shown in Fig. 13A, on the work machine setting screen D2, the operator may be able to input a position of the work machine antenna 164B (see Fig. 13B). For example, the operator inputs a distance (vertical length) from the hitch point 31 (see Fig. 13B) to the work machine antenna 164B, and inputs a distance (horizontal length) from a center in the left-right direction of a machine body of the tractor 10A (see Fig. 13B) to the work machine antenna 164B. The setting processing unit 211 sets a position specified by the vertical length and the horizontal length input by the operator as an antenna position. Note that, on the work machine setting screen D2, the operator may be able to input a length from a rear end of the machine body of the tractor 10A (see Fig. 13B) to the hitch point 31, a length from the hitch point 31 to an axle center of the work machine 30 (trailer) (see Fig. 13B), a length from the center in the left-right direction of the machine body of the tractor 10A (see Fig. 13B) to a work center of the work machine 30 (see Fig. 13B), and a length from the center in the left-right direction of the machine body of the tractor 10A to each of a left end and a right end of the work machine 30. When the work machine 30 is a work machine (for example, a potato harvester) that harvests objects to be harvested along ridges, the operator may be able to input a distance between ridges and the number of ridges on the work machine setting screen D2.

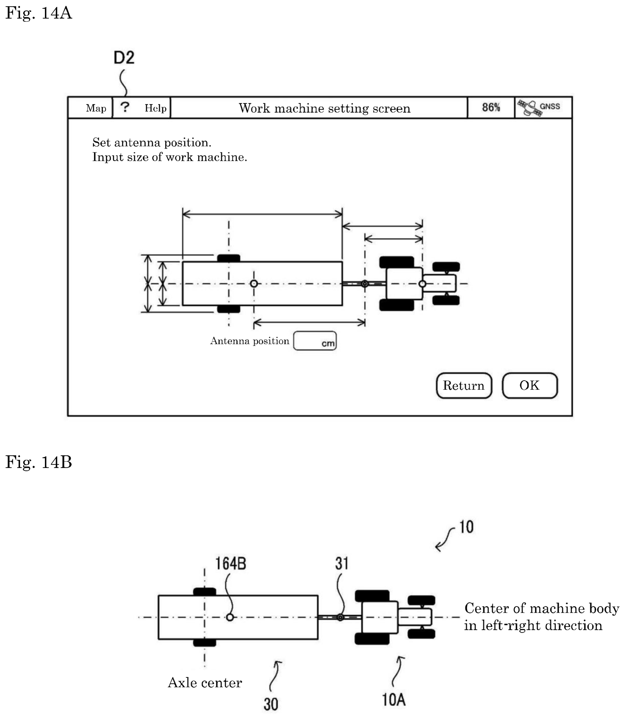

Fig. 14A shows another example of the work machine setting screen D2 shown in Fig. 8. Note that Fig. 14B is a reference view for describing a method for setting an antenna shown in Fig. 14A. As shown in Fig. 14A, when the work machine antenna 164B (see Fig. 14B) is set at a position (center in the left-right direction) that coincides with the center in the left-right direction of the machine body of the tractor 10A (see Fig. 14B), the operator may be able to input the distance (vertical length) from the hitch point 31 (seeFig. 14B) to the work machine antenna 164B on the work machine setting screen D2. The operation terminal 20 may display the work machine setting screen D2 shown in Fig. 13A or the work machine setting screen D2 shown in Fig. 14A based on a type or work content of the work machine 30.

As another embodiment of the present invention, when the work vehicle 10 is caused to travel straight, the vehicle control device 11 may cause the work vehicle 10 to travel straight based on the vehicle positioning information (an example of the second positioning information of the present invention) measured by the vehicle antenna 164A without using the work machine positioning information (an example of the first positioning information of the present invention) measured by the work machine antenna 164B. For example, when the work vehicle 10 is caused to automatically travel straight along a straight route, the vehicle control device 11 ignores the work machine positioning information of the work machine 30 or invalidates the positioning processing performed by the work machine antenna 164B, and causes the work vehicle 10 to travel straight based on the vehicle positioning information of the tractor 10A. This enables the work vehicle 10 to stably travel straight.

As another embodiment of the present invention, when the work vehicle 10 is caused to turn, the vehicle control device 11 may cause the work vehicle 10 to turn by switching to the manual traveling mode in a case where the work machine positioning information of the work machine 30 cannot be acquired or in a case where positioning accuracy of the work machine positioning information is less than predetermined accuracy. Note that the "case where the work machine positioning information cannot be acquired" includes a case where the work machine antenna 164B is not provided in the work machine 30 (object to be towed) (a case where straight travel is performed based on the positioning information of the vehicle antenna 164A).

In the case where the work machine positioning information cannot be acquired or the positioning accuracy of the work machine positioning information is less than the predetermined accuracy, it is difficult to cause the work machine 30 to travel along a turning route, and misalignment with respect to the turning route is likely to occur. Therefore, the vehicle control device 11 may be configured to switch to the manual traveling mode and cause the work vehicle 10 to turn in accordance with manual steering by the operator. The vehicle control device 11 may be configured to temporarily stop the work vehicle 10 when the automatic switch to the manual traveling mode has been performed, or may be configured to switch to the manual traveling mode in accordance with an operation of the operator when the work vehicle 10 is temporarily stopped at a turning start position. Further, the vehicle control device 11 may determine whether or not the work machine positioning information can be acquired from the work machine antenna 164B and whether or not the positioning accuracy of the acquired work machine positioning information is equal to or more than the predetermined accuracy while the work vehicle 10 is caused to travel straight based on the vehicle positioning information of the tractor 10A, and determine whether or not to cause the automatic traveling on the turning route based on the work machine positioning information or to switch to the manual traveling mode and cause the turning.

In each of the above-described embodiments, the automatic traveling system 1 corresponds to an automatic traveling system according to the present invention, but the automatic traveling system according to the present invention may include the work vehicle 10 alone. Further, the automatic traveling system according to the present invention may include the operation terminal 20 alone. When the automatic traveling system according to the present invention includes the operation terminal 20 alone, the present invention can be specified as an invention of a route generation method for generating the target route R for automatic traveling of the work vehicle 10 including a towing vehicle (the tractor 10A) and an object to be towed (the work machine 30, a trailer, or the like) swingably connected to the towing vehicle. Specifically, the route generation method generates the target route R for the automatic traveling of the work vehicle based on first positioning information measured by a first positioning device provided in the object to be towed.

### [Additional note of invention]

Hereinafter, an outline of the invention extracted from each of the above-described embodiments will be additionally described. Note that configurations and processing functions, which are described in the following additional notes, can be selected and freely combined.

### <Additional Note 1>

An automatic traveling method for automatic traveling of a work vehicle including a towing vehicle and an object to be towed swingably connected to the towing vehicle, the automatic traveling method including
causing the work vehicle to automatically travel based on first positioning information measured by a first positioning device provided in the object to be towed.

### <Additional Note 2>

The automatic traveling method according to Additional Note 1, further including
estimating a posture of the object to be towed with respect to the towing vehicle based on the first positioning information, and causing the work vehicle to automatically travel based on the estimated posture of the object to be towed.

### <Additional Note 3>

The automatic traveling method according to Additional Note 2, wherein
the posture of the object to be towed is estimated based on the first positioning information and second positioning information measured by a second positioning device provided in the towing vehicle.

### <Additional Note 4>

The automatic traveling method according to Additional Note 2 or 3, further including
controlling a traveling direction of the towing vehicle based on an amount of change in the posture of the object to be towed, the amount of change being estimated from a current traveling state of the towing vehicle.

### <Additional Note 5>

The automatic traveling method according to Additional Note 4, further including
causing the towing vehicle to execute a countermeasure process when the amount of change is equal to or more than a threshold.

### <Additional Note 6>

The automatic traveling method according to Additional Note 5, wherein
the countermeasure process includes a process of decelerating or stopping the towing vehicle or a process of causing the towing vehicle to travel forward or backward or to turn to change the posture of the object to be towed.

### <Additional Note 7>

The automatic traveling method according to any one of Additional Notes 1 to 6, further including
causing the towing vehicle to execute an avoidance process for avoiding contact of the object to be towed with a field end when a distance from an end of the object to be towed to the field end specified based on the first positioning information is less than a predetermined distance.

### <Additional Note 8>

The automatic traveling method according to any one of Additional Notes 1 to 7, further including
displaying a setting screen on which an outer size of the object to be towed and a position of the first positioning device are settable.

### <Additional Note 9>

The automatic traveling method according to any one of Additional Notes 1 to 8, further including
displaying a setting screen on which a control target point for controlling a position of the object to be towed is settable.

### <Additional Note 10>

The automatic traveling method according to Additional Note 9, wherein
the work vehicle is caused to automatically travel in such a manner that the control target point passes through a preset target route.

### <Additional Note 11>

The automatic traveling method according to any one of Additional Notes 1 to 10, wherein
the work vehicle is caused to travel straight based on second positioning information measured by a second positioning device provided in the towing vehicle without using the first positioning information in a case where the work vehicle is caused to travel straight.

### <Additional Note 12>

The automatic traveling method according to any one of Additional Notes 1 to 11, wherein
when it is impossible to acquire the first positioning information or positioning accuracy of the first positioning information is less than predetermined accuracy in a case where the work vehicle is caused to turn, the work vehicle is caused to turn by switching to a manual traveling mode.

### <Additional Note 13>

An automatic traveling program for automatic traveling of a work vehicle including a towing vehicle and an object to be towed swingably connected to the towing vehicle,
the automatic traveling program causing one or a plurality of processors to cause the work vehicle to automatically travel based on first positioning information measured by a first positioning device provided in the object to be towed.

### <Additional Note 14>

An automatic traveling system that causes a work vehicle to automatically travel, the work vehicle including a towing vehicle and an object to be towed swingably connected to the towing vehicle, wherein
the work vehicle is caused to automatically travel based on first positioning information measured by a first positioning device provided in the object to be towed.

### LIST OF REFERENCE SIGNS

- 1: Automatic traveling system
- 10: Work vehicle
- 10A: Tractor (towing vehicle)
- 11: Vehicle control device
- 16: Positioning unit
- 20: Operation terminal
- 21: Operation control unit
- 30: Work machine (object to be towed)
- 31: Hitch point
- 32: Wheel
- 111: Travel processing unit
- 161: Positioning control unit
- 164A: Vehicle antenna (second positioning device)
- 164B: Work machine antenna (first positioning device)
- 211: Setting processing unit
- 212: Generation processing unit
- 213: Output processing unit
- D1: Menu screen
- D2: Work machine setting screen
- F: Field
- F1: Work area
- F2: Non-work area
- R: Target route
- S: Work start position
- G: Work end position
- P1: Control target point

## Claims

1. An automatic traveling method for automatic traveling of a work vehicle including a towing vehicle and an object to be towed swingably connected to the towing vehicle, the automatic traveling method comprising
causing the work vehicle to automatically travel based on first positioning information measured by a first positioning device provided in the object to be towed.

2. The automatic traveling method according to claim 1, further comprising
estimating a posture of the object to be towed with respect to the towing vehicle based on the first positioning information, and causing the work vehicle to automatically travel based on the estimated posture of the object to be towed.

3. The automatic traveling method according to claim 2, wherein
the posture of the object to be towed is estimated based on the first positioning information and second positioning information measured by a second positioning device provided in the towing vehicle.

4. The automatic traveling method according to claim 2 or 3, further comprising
controlling a traveling direction of the towing vehicle based on an amount of change in the posture of the object to be towed, the amount of change being estimated from a current traveling state of the towing vehicle.

5. The automatic traveling method according to claim 4, further comprising
causing the towing vehicle to execute a countermeasure process when the amount of change is equal to or more than a threshold.

6. The automatic traveling method according to claim 5, wherein
the countermeasure process includes a process of decelerating or stopping the towing vehicle or a process of causing the towing vehicle to travel forward or backward or to turn to change the posture of the object to be towed.

7. The automatic traveling method according to claim 1, further comprising
causing the towing vehicle to execute an avoidance process for avoiding contact of the object to be towed with a field end when a distance from an end of the object to be towed to the field end specified based on the first positioning information is less than a predetermined distance.

8. The automatic traveling method according to claim 1, further comprising
displaying a setting screen on which an outer size of the object to be towed and a position of the first positioning device are settable.

9. The automatic traveling method according to claim 1, further comprising
displaying a setting screen on which a control target point for controlling a position of the object to be towed is settable.

10. The automatic traveling method according to claim 9, wherein
the work vehicle is caused to automatically travel in such a manner that the control target point passes through a preset target route.

11. The automatic traveling method according to claim 1, wherein
the work vehicle is caused to travel straight based on second positioning information measured by a second positioning device provided in the towing vehicle without using the first positioning information in a case where the work vehicle is caused to travel straight.

12. The automatic traveling method according to claim 1, wherein
when it is impossible to acquire the first positioning information or positioning accuracy of the first positioning information is less than predetermined accuracy in a case where the work vehicle is caused to turn, the work vehicle is caused to turn by switching to a manual traveling mode.

13. An automatic traveling program for automatic traveling of a work vehicle including a towing vehicle and an object to be towed swingably connected to the towing vehicle,
the automatic traveling program causing one or a plurality of processors to cause the work vehicle to automatically travel based on first positioning information measured by a first positioning device provided in the object to be towed.

14. An automatic traveling system that causes a work vehicle to automatically travel, the work vehicle including a towing vehicle and an object to be towed swingably connected to the towing vehicle, wherein
the work vehicle is caused to automatically travel based on first positioning information measured by a first positioning device provided in the object to be towed.
